(19) Europäisches Patentamt

European Patent Office

Office européen des brevets

(11) **EP 1 415 443 B1**

(12) **EUROPEAN PATENT SPECIFICATION**

(45) Date of publication and mention
of the grant of the patent:
**16.11.2005 Bulletin 2005/46**

(51) Int Cl.⁷: **H04L 12/56**, H04L 1/00

(21) Application number: **01971843.6**

(22) Date of filing: **01.08.2001**

(86) International application number:
**PCT/EP2001/008908**

(87) International publication number:
**WO 2003/015352 (20.02.2003 Gazette 2003/08)**

(54) **APPARATUS AND METHOD FOR FLOW SCHEDULING BASED ON PRIORITIES IN A MOBILE NETWORK**

EINRICHTUNG UND VERFAHREN ZUR FLUSSSTEUERUNG BASIEREND AUF PRIORITÄTEN IN EINEM MOBILEN NETZWERK

DISPOSITIF ET PROCEDE SERVANT A PROGRAMMER UN DEBIT EN FONCTION DE PRIORITES D'UN RESEAU MOBILE

(84) Designated Contracting States:
**AT BE CH CY DE DK ES FI FR GB GR IE IT LI LU MC NL PT SE TR**

(43) Date of publication of application:
**06.05.2004 Bulletin 2004/19**

(73) Proprietor: **Nokia Corporation
02150 Espoo (FI)**

(72) Inventors:
• **GARCIA, Javier, Romero
E-29013 Málaga (ES)**

• **MAESTRA, Daniel Fernandez
29007, Malaga (ES)**
• **LINARES, Héctor Montes, c/o Nokia Corporation
02150 Espoo (FI)**

(74) Representative: **Ungerer, Olaf
Eisenführ, Speiser & Partner
Arnulfstrasse 25
80335 München (DE)**

(56) References cited:
EP-A- 0 627 827          WO-A-00/62457
DE-A- 19 722 433         US-A- 5 432 787

**Description**

FIELD OF THE INVENTION

The invention relates to an apparatus and method for preparing a packet flow context for transmission in a mobile network, and especially for preparing such for a multi-channel transmission.

BACKGROUND OF THE INVENTION

In a mobile network, such as a GPRS or a EGPRS network, a several number of users can simultaneously be allocated in the same physical radio channel and multiplexed onto that channel. In a fixed network, such as a local area network, a determined quality of service is given. Therefore, a fixed scheme how to manage a multiple of packet flow context can be managed.

However, in a mobile network, such as a cellular network, channel conditions are continuously changing so that bit rates can fall short of the bit rates usually provided.

In a mobile network, when every user is allocated to the same ratio of the transmission capacity of a connection channel, for example in terms of time slots provided, the transmission rate can be below the transmission rate which is needed by some users.

WO 00/62457 A discloses a method and system for a data traffic scheduling. Thereby, downstream cells are de-multiplexed into the downstream traffic queue corresponding to its subscriber unit and traffic type. A cell scheduler first checks the pending reservation request buffer for the highest priority traffic type to see, if any cells of that type are awaiting transmission. Then, cells of the highest priority traffic type are sent, until all cells of the high priority traffic have been sent. Then, the cells from the next highest priority are scheduled by the scheduler. Because cells are serviced in a prioritized manner, the wireless network is able to support multiple qualities of service.

The apparatus and method known from WO 00/62457 A has the disadvantage that cells having the highest priority are always transmitted first, even when the guaranteed bit rate for the cell of the highest transmission priority type has already been achieved.

SUMMARY OF THE INVENTION

It is therefore the object of the invention, to provide an apparatus and method for preparing a packet flow context for transmission in a mobile network, in which at least two different data flows can be managed in an appropriate way.

The object is solved by an apparatus according to claim 1 and by a method according to claim 13. Advantageous developments of the invention are mentioned in the dependent claims.

The apparatus and the method of the invention have the advantage that for each data flow a transmission priority is determined, and the data flows are scheduled according to this determination.

According to an advantageous development, the transmission priority of each of the data flows is determined independent of their traffic classes, such as guaranteed or non-guaranteed streaming, interactive traffic or background traffic. Thereby, the guaranteed streaming traffic class is for a packet flow context for which a guaranteed transmission rate is negotiated. Hence, as long as the guaranteed transmission rate is available, the data flows of the different traffic classes can be scheduled, such that an appropriate transmission rate is reached for each data flow and the guaranteed throughput is maintained. Thereby, available transmission capabilities are allocated in a way so that radio blocks of data flows having higher weights are scheduled first, than the ones having lower weights, until all available capacity is filled up for the given reporting period. Radio blocks with same weight can be sent in a round robin fashion or any other algorithm.

According to another advantageous development, the scheduling interworks with policing and link adaptation so that, for example, weights can be updated when a packet is lost, the quality of service changes or a user uses more transmission capacity than negotiated. Therefore it is advantageous, that that apparatus reserves at least the transmission capacity of the mobile network, which is needed for a data flow whose transmission rate is guaranteed.

According to a further advantageous development, a link adaptation is provided to select a modulation and coding scheme for maximizing the throughput of the mobile network.

BRIEF SUMMARY OF THE ACCOMPANIED DRAWINGS

The invention is further described in detail with relation to the accompanying drawings, in which:

Fig. 1 shows a schematic structure of an embodiment of the invention;

Fig. 2 shows the structure of the embodiment of the invention in greater detail;

Fig. 3 shows a modulation and coding scheme according to the embodiment of the invention;

Fig. 4 shows a general scheduling scheme;

Fig. 5 shows a weight determination means according to the embodiment of the invention;

Fig.6 shows a part of the scheduling according to the embodiment of the invention;

Fig. 7 shows a weight determination according to the embodiment;

Fig. 8 shows the scheduling according to the embodiment;

Fig. 9 shows the scheduling according to the embodiment of the invention after an interruption in the proceeding of the transmission turns;

Fig. 10 shows a flow chart of the method according to a preferred embodiment; and

Fig. 11 shows a flow chart of the allocation procedure of the method shown in Fig. 10.

DESCRIPTION OF THE PREFERRED EMBODIMENTS OF THE INVENTION

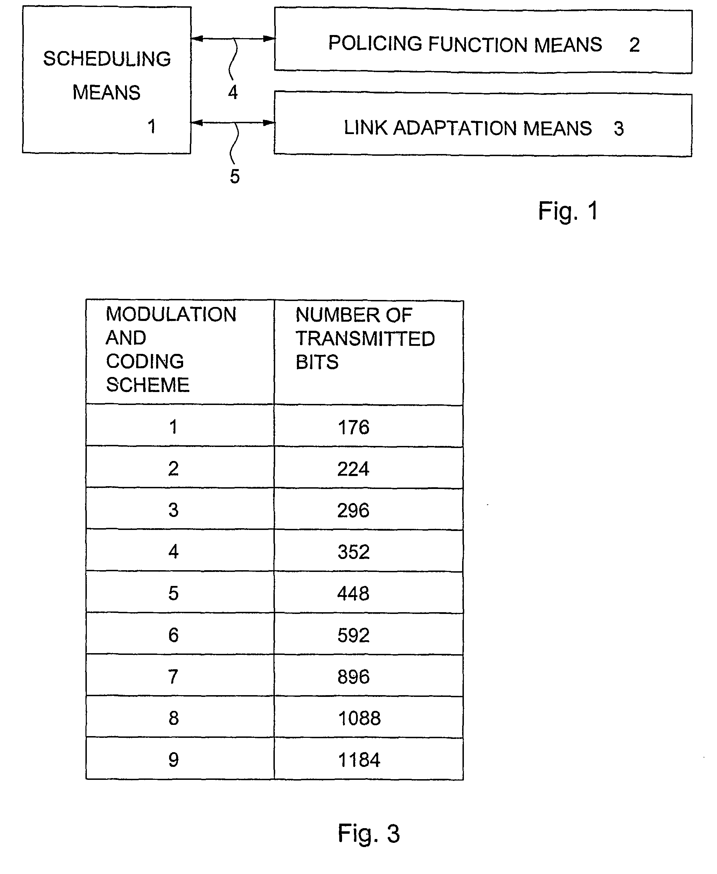

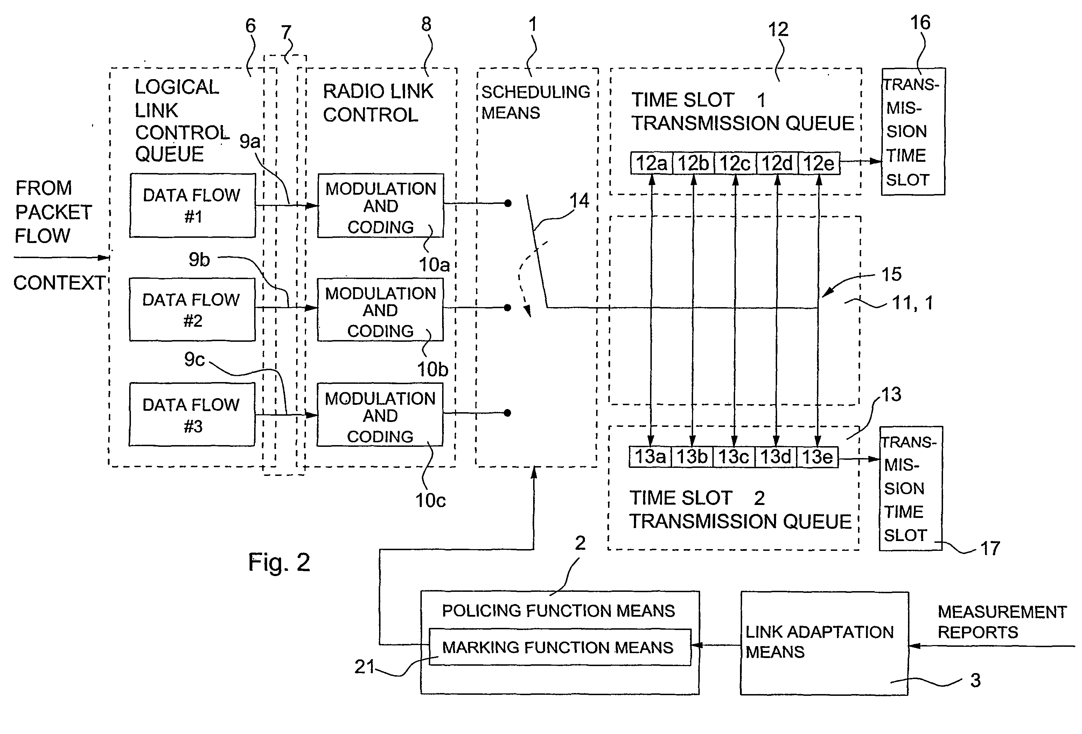

Fig. 1 shows the schematic structure of the embodiment of the invention. The apparatus of the invention comprises a scheduling means 1, policing function means 2 and a link adaptation means 3, whereby the scheduling means 1 is connected with the policing function means 2 through a connector 4 and the scheduling means 1 is connected with the link adaptation means 3 through a connector 5.

The policing function means 2 monitors the provided quality of service during the connection to make sure that the measured quality of service is in line with the negotiated one. The link adaptation means 3 monitors the radio link condition for each connection so that the throughput per channel can be maximized.

The connection channel may be a physical channel but according to the preferred embodiment it is a logical one. For example a lot of time slots can be grouped to N time slots per group to provide N logical channels. In both senses the present invention supports a multi-channel connection, even when the number of channels is changing or the quality, that means the transmission capacity of only one or some channels is changing. Accordingly, the link adaptation means 3 monitors the radio link condition for each connection (physical or logical), trying to maximize throughput per time slot, because radio link conditions of the mobile network are changing continuously.

Fig. 2 shows the structure of the apparatus of the embodiment in greater detail. In this and all other figures same elements are characterized by identical reference numerals to avoid repetitions.

The apparatus shown in Fig. 2 is adapted to down-link transmission, but it can be adapted to up-link transmission with some minor modifications. Fig. 2 shows a data flow #1, a data flow #2 and a data flow #3 which are from packet flow context and which are queued in the logical link control queue 6 of the base station system. Thereby, each data flow #1, #2, #3 has an associated queue where all the packet data units are waiting for transmission. A packet control unit 7 segments the packet data units of the data flow #1, #2, #3 stored in the link layer control queue 6, which are going to be sent as radio link control packets, and puts them in a transmission base frame associated radio link control 8, as shown by arrows 9a to 9c. In the radio link control 8 the packet data units of the data flows #1, #2, #3 are modulated and coded according to a modulation and coding scheme in modulation and coding means 10a to 10c. The number of bits contained in each LLC segment depends on the selection of modulation and coding scheme.

A part 11 of the scheduling means 1 assigns one of the time slots 12, 13 and a scheduling queue 12a to 12e or 13a to 13e for each time slot 12, 13. Thereby, it is advantageous that the time slot queue is not a first-in/first-out memory so that it is possible to access directly each memory position.

The scheduling means 1 further comprises a switching element 14 for switching between the different queues given by the modulation and coding means 10a to 10c of the radio link control 8. The part 11 of the scheduling means 1 comprises an assigning means 15 to assign the packet selected by switching element 14 to one of the scheduled time slot elements 12a to 12e, 13a to 13e of the time slot transmission queues 12, 13.

The data packets stored in elements 12a to 12e are successively transmitted to the transmission time slot 16 and the data packets stored in the elements 13a to 13e are successively transmitted to the transmission time slot 17. As long as no new adaptation occurs, the packet data of a data flow which are successively arriving at, for example, transmission time slot 16 are modulated and coded by the same modulation and coding scheme. In the embodiment, an input for the scheduling means 1 comes from the marking function means 21, which provides at least one of the functionalities of the policing function of the policing function means 2. The policing function means 2 uses information provided by the link adaptation means 3 in order to determine the number of blocks to be marked.

Thereby, the link adaptation means 3 takes as input the measurement reports sent by the mobile stations. Hence, if the link adaptation means 3 decides to change the respective modulation and coding scheme, it will be changed for next packet data units. On the other hand, if no change is needed, next packet data units will be transmitted with the same modulation and coding scheme.

Fig. 3 shows a table describing a modulation and coding scheme according to the embodiment of the invention. On the left side of the table nine different modulation and coding schemes are referred to by numerals 1 to 9. On the right side of the table the number of bits transmitted with each radio block is displayed for each of said modulation and coding schemes. For example, a radio block modulated and coded according to the modulation and coding scheme number 4 has a total number of 352 bits of useful data.

This throughput estimation made by the link adaptation means 3 depends on the radio link control mode of transmission. In negative unit acknowledgement character (NACK) mode, the estimated throughput per time slot can be directly computed from the modulation and coding scheme selected. Thereby, the link adaptation means 3 selects the highest modulation and coding scheme that matches the reliability quality of service requirements, depending on the radio link conditions. Hence, in NACK mode, the number of transmitted bits of useful data on each radio block period or one of the radio link control queues 8 is given by the number of transmitted bits divided by the duration of the radio link control packet data. Thereby, the duration of the radio link control packet data is for example 20 ms. In the acknowledgment character (ACK) mode the retransmission mechanisms must be taken into account.

The link adaptation means 3 selects the modulation and coding scheme by which the maximum throughput and QoS reliability requirements can be achieved.

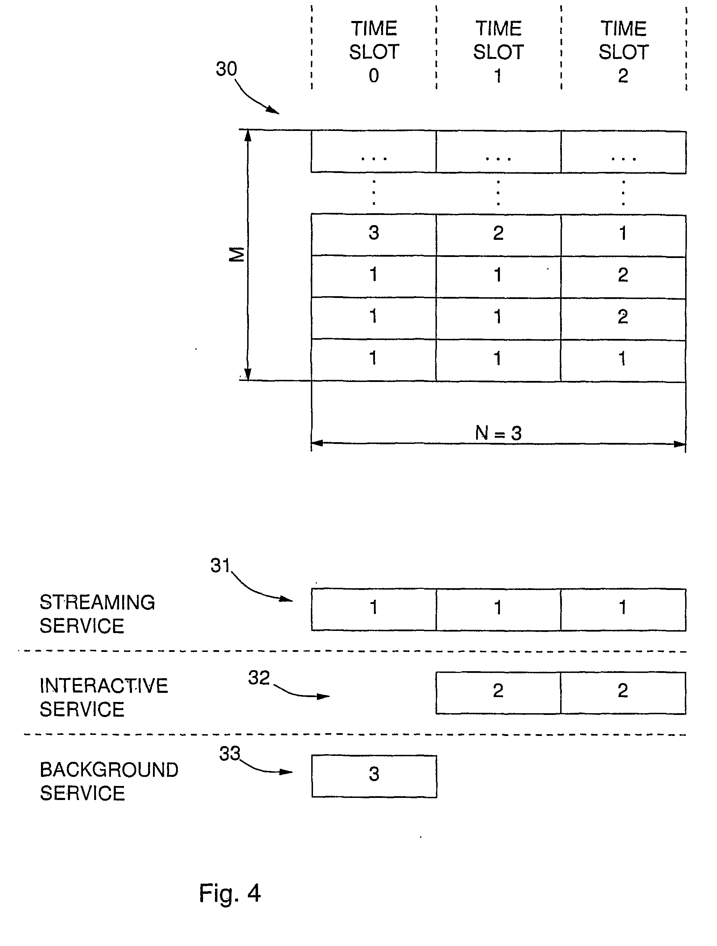

Fig. 4 shows a scheduling, especially a scheduling matrix, according to a general embodiment of the invention. The scheduling is based on a matrix 30 having M rows and N columns, what means that said scheduling is made for a certain period of time in advance characterized by the maximum duration of scheduling round M, so that the scheduling round lasts more than a packet data and it is multi-slot connection aware. In Fig. 4 data flows of different classes are shown. The packet data units of these data flows are scheduled over the matrix 30 according to their transmission priority.

In Fig. 4 the multi-slot connection is characterized by N = 3 time slots numbered from 0 to 2. The packet data units of a data flow of the streaming service class, shown with boxed numeral 1, are distributed over all three time slots. A data flow 32 of the interactive service class is distributed over time slot 1 and time slot 2, as shown by boxed numerals 2 in Fig. 4. Data flow of the background service class is distributed over time slot 0, as shown by boxed numeral 3. In Fig. 4, the time slots 0 and 1 are enough to provide the guaranteed throughput. However, more resources are allocated for the streaming service, whereby a higher bit rate is achieved.

The number of radio blocks that has to be scheduled for a guaranteed throughput data flow 31, in radio link control queue #i is given by

$$N (i) = \text{round-up} ((RSC(i) * NT)/(R(i) * N)) = \text{round-up} (RSC(i) * M/R(i)).$$

Thereby, the target throughput is RSC (i) and the total number of scheduling turns is NT, that is the number of slots of the connection N times the duration of the scheduling round M. The bitrate estimation from link adaptation means is expressed through R(i) which denotes the estimated throughput and takes into account retransmitted radio-blocks.

If the link adaptation means changes the modulation and coding scheme during a scheduling round, which lasts M times, for example, 20 ms, the remaining current scheduling matrix is rejected and a new matrix of scheduling begins with new weight allocation, including those packet data unit blocks of the previous matrix which have not been served. The scheduling algorithm must modify the mark of the streaming packets to achieve with the new radio link conditions the guaranteed bit rate negotiated.

The scheduling round duration parameter may vary depending on the reporting period duration between measurement reports received from the mobile stations. Thereby, the reporting period duration is the period between measurement reports received from the mobile stations.

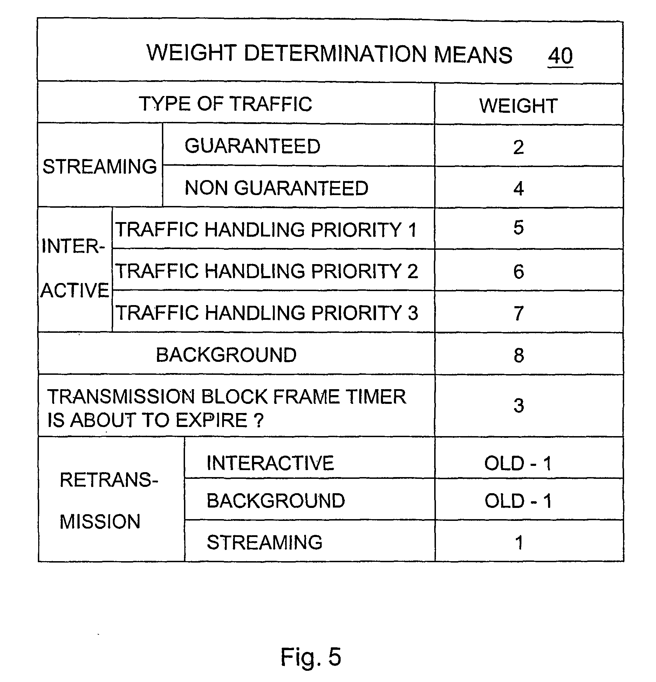

Fig. 5 shows a weight determination means 40 of the apparatus of the embodiment for determining the weight value of a radio link control block. To the type of traffic, as shown on the left hand side on the table, different weight values correspond, as shown on the right hand side. For guaranteed streaming the weight value is 2 and for non-guaranteed streaming the weight value is 4. For interactive traffic three different weight values are supplied. According to the traffic handling priorities 1, 2 and 3 the weight values 5, 6 and 7 are set. The background weight value is 8, because its priority is the lowest. If the transmission block frame timer is about to expire, the weight value of 3 is set to achieve a priority between said guaranteed and non-guaranteed streaming.

Retransmissions must be treated in an accurate way to decrease the delay, mainly for streaming flows. Therefore, the retransmission need to have more priority than previously. Hence, they can preempt a position in the matrix of any radio link control block with less priority (higher weight). Streaming radio link control blocks to be retransmitted are managed in a different way, because every retransmitted streaming radio link control block needs to be sent with more priority than streaming radio link control block marked as guaranteed. That means, in case of streaming, the new priority has to be even higher than the priority of guaranteed streaming. Therefore, retransmitted streaming is always set to the weight value of 1, while in case of interactive or background streaming, the weight value of the retransmission is decreased by 1. It is also possible to assign the same weight to different types of traffic. In this case, those packets would be treated with round robin or any other fairness algorithm.

A weight determination means 40 can use the table shown in Fig. 5. It is just an example and different weights could be assigned according to particular system requirements.

According to an exemplary concept, the weight value can be obtained from the sum of: traffic class (2 streaming, 4 interactive, 8 background), policing function mark (only for streaming traffic class: 0 guaranteed, 2 non-guaranteed), traffic handling priority (only for interactive traffic class: 1, 2, 3), user class (subscription parameter, to differentiate among users), transmission block frame timer (3 if expiring, 0 if not). In case that a transmission block frame timer is about to expire, a weight value of 3 is set instead, and retransmissions are handled as described according to Fig. 5.

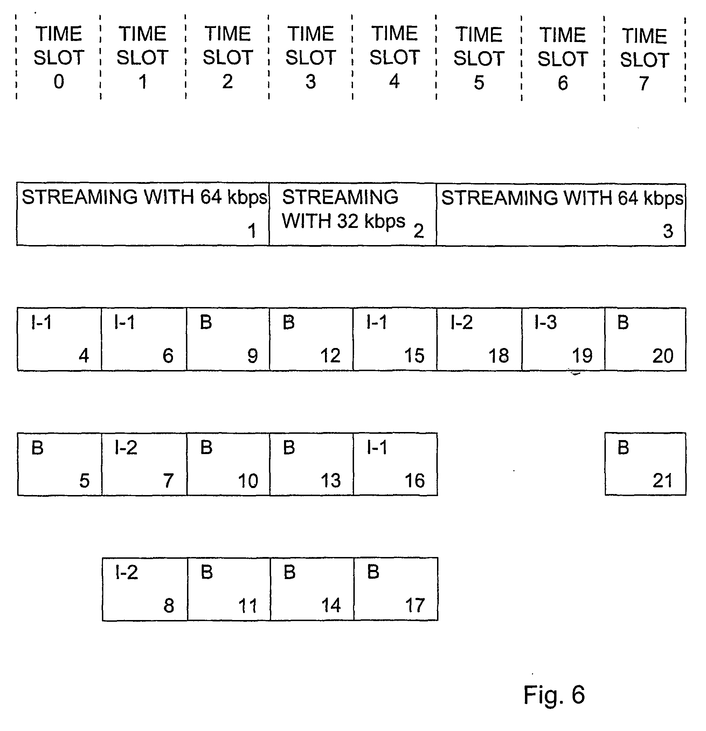

In the following an example of use is described with reference to Figs. 6 to 9.

In the example of use there are several users in the certain cell. Their characteristics are:

streaming, with guaranteed bit rate = 64 kbps,
streaming, with guaranteed bit rate = 32 kbps,
streaming, with guaranteed bit rate = 64 kbps,
4 interactive, with traffic handling priority 1,
3 interactive, with traffic handling priority 2,
1 interactive, with traffic handling priority 3, and
10 background.

The channel allocation status is shown in Fig. 6. On top of Fig. 6 different connection channels in terms of time slots 0 to 7 are shown. Below, it is shown allocation of all the connections, each of one is identified by a number in the bottom right and by the type of the quality of service attributes (traffic class, guaranteed throughput or traffic handling priority) displayed in the top left. For example, the data flow identified by number 18 (bottom right) is of the interactive user class with traffic handling priority 2.

The assumptions of the example are the following ones:

The modulation and coding scheme selected for the first connection (time slots 0, 1, 2) is the modulation and coding scheme number 9 with the number of transmitted bits of 1184, as shown in Fig. 3, having a retransmissions probability of 0.3. The modulation and coding scheme selected for the second connection (time slots 3 and 4) is the modulation and coding scheme number 7 with 896 transmitted bits having a retransmission probability of 0.2, and the modulation and coding scheme selected for the third connection is the modulation and coding scheme number 6 with 592 transmitted bits having a retransmission probability of 0.1. The duration of scheduling round parameter M is 5, that is the scheduling round lasts 100 ms. The user class parameter is not used in this example.

First, the number of transmission turns is calculated for each streaming connection:

$$N\,(1) = \text{round-up}\,((RSC(1) * M)/(R(1) = \text{round-up}\,((64 * 5)/(59.2(1\text{-}0.3))) = 8,$$

$$N\,(2) = \text{round-up}\,((32 * 5)/(44.8(1\text{-}0.2)) = 5,$$

and

$$N\,(3) = \text{round-up}\,((64 * 5)/(29.6(1\text{-}0.1)) = 13.$$

Hence, in the scheduling matrix belonging to this example of use, 8 radio link control blocks must be reserved for the guaranteed streaming of the data flow identified by number 1, 5 radio link control blocks must be reserved for the guaranteed streaming identified by number 2, and 13 radio link control blocks must be reserved for guaranteed streaming of the data flow identified by number 3.

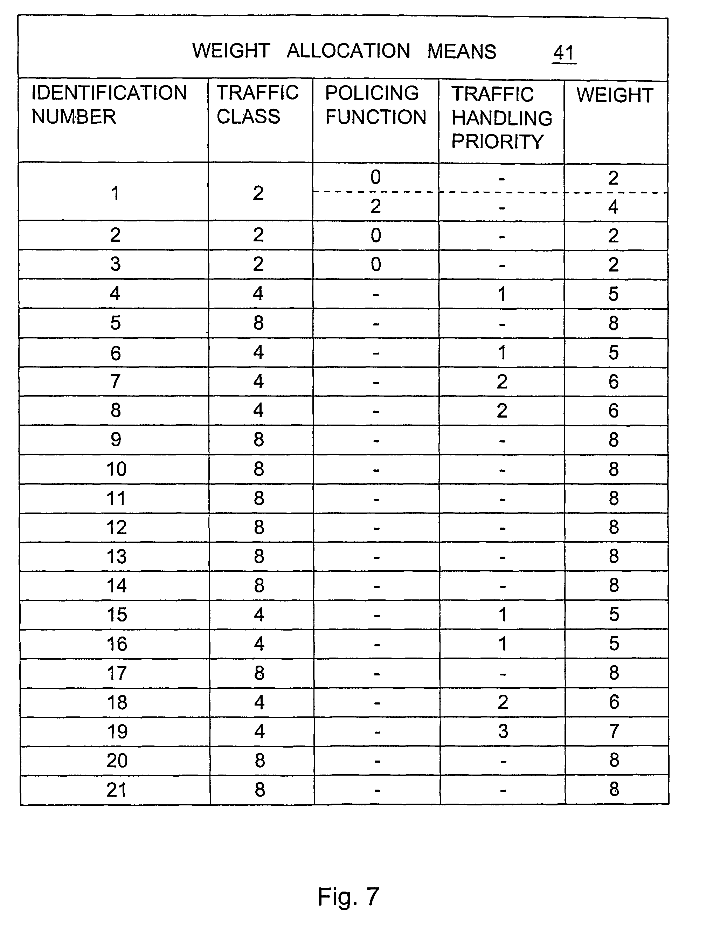

Fig. 7 shows a weight allocation means 41. The weight allocation means 41 allocates a weight and thereby a priority to each of the data flows identified by their identification number. The table shows the columns identification number, traffic class, policing function mark, traffic handling priority and weight. Thereby, for each data flow identified by the identification number a weight value is given. The weight value is calculated from the sum of the traffic class value, the policing function mark value and the traffic handling priority value, which are also shown in the table to make the calculation clear.

The policing function mark value of 2 corresponds to a non-guaranteed streaming radio link control block.

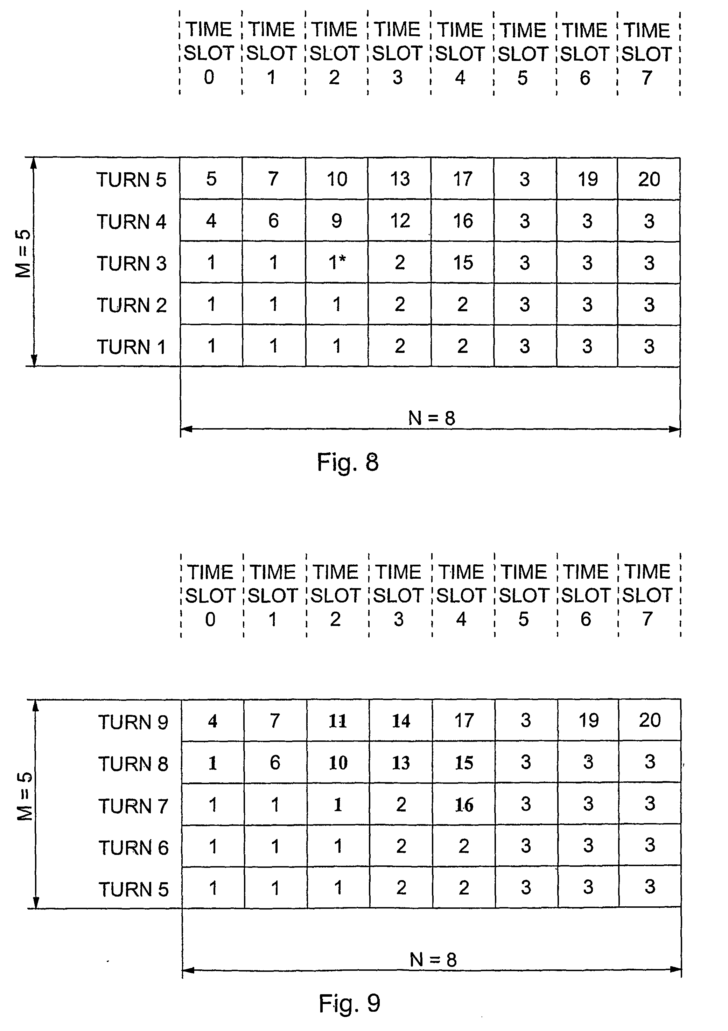

Fig. 8 shows the scheduling matrix of the example of use according to the embodiment. For this scheduling matrix the duration of scheduling rounds parameter M is 5 and the number of connection channels N is 8. The transmission of the radio link control blocks shown in the scheduling matrix is from the bottom to the top. Therefore, turns 1 to 5 are successively sent to the physical connection multi-channel. The number in the boxes of the matrix are the identification numbers of the data flow shown in Figs. 6 and 7.

For data flow with identification number 1 eight radio link control blocks (guaranteed) plus one additional radio link control block (non-guaranteed) are allocated in turns 1, 2 and 3 over time slots 0, 1 and 2. The additional radio link control block is marked with an asterisk and has been allocated after blocks of guaranteed streaming, but before interactive or background services, according to the weight values shown in Fig. 7. The other streaming connections are allocated over time slots 3, 4 and time slots 5, 6, 7, respectively. Hence, for each of the streaming connections at least the number of radio blocks calculated to guarantee the negotiated bit rate are allocated. The rest of the radio link control blocks are allocated from higher priorities to lower priorities, that is from the lowest to the highest weight shown in the table of Fig. 7, until the matrix is full, or all the blocks are allocated. When there is multiplexing of several blocks with the same priority, it is first allocated those blocks less recently served. For example, in time slot 2 the connection with identification number 9 is allocated before the connection with identification number 10.

The transmission of the blocks is made from the bottom to the top of the matrix, that means first time slots 0 to 7 of turn 1 are transmitted, thereafter time slots 0 to 7 of turn 2 are transmitted, and so on, until time slots 0 to 7 of turn 5 have been transmitted. Then, all blocks allocated have been transmitted and a new allocation turn allocating a new matrix is started.

However, when the transmission is interrupted, for example due to a change in said modulation and coding scheme made by the link adaptation means 3, the following allocation turn allocating a new matrix must care about the untransmitted blocks.

For example, when after four turns of transmission (after 80 ms), a measurement report from connection which connection identification number 1 arrives, and a modulation and coding scheme change has been made by the link adaptation means 3, changing from the modulation and coding scheme number 9 to the modulation and coding scheme number 7, the remaining matrix is rejected and the following new turn of scheduling is initiated:

The number of transmission turns for data flow (connection) with identification number 1 is recalculated, because of the change in its modulation and coding scheme which changes the transmission bit rate.

With this new number of transmission turns for connection number 1, the new matrix can be allocated, as shown in Fig. 9.

In Fig. 9 the main differences to the matrix allocated as shown in Fig. 8, are shown in boldface. The reason for these changes are:

Connection number 1 needs two more turns (10 instead of 8) to guarantee the negotiated transmission rate. In time slot 2 the data flow with identification number 10 is allocated before the data flow with identification number 9 according to the rule of allocation of connections with the same priority. In the previous scheduling turn the data flow with identification number 9 was served, so the less recently served is data flow with identification number 10. The same occurs in time slot 3 with connections number 12, 13 and 14, and in the time slot 4 with connections number 15 and 16.

After all blocks of the new matrix are allocated, the transmission is starting with turn 5, until all blocks have been transmitted.

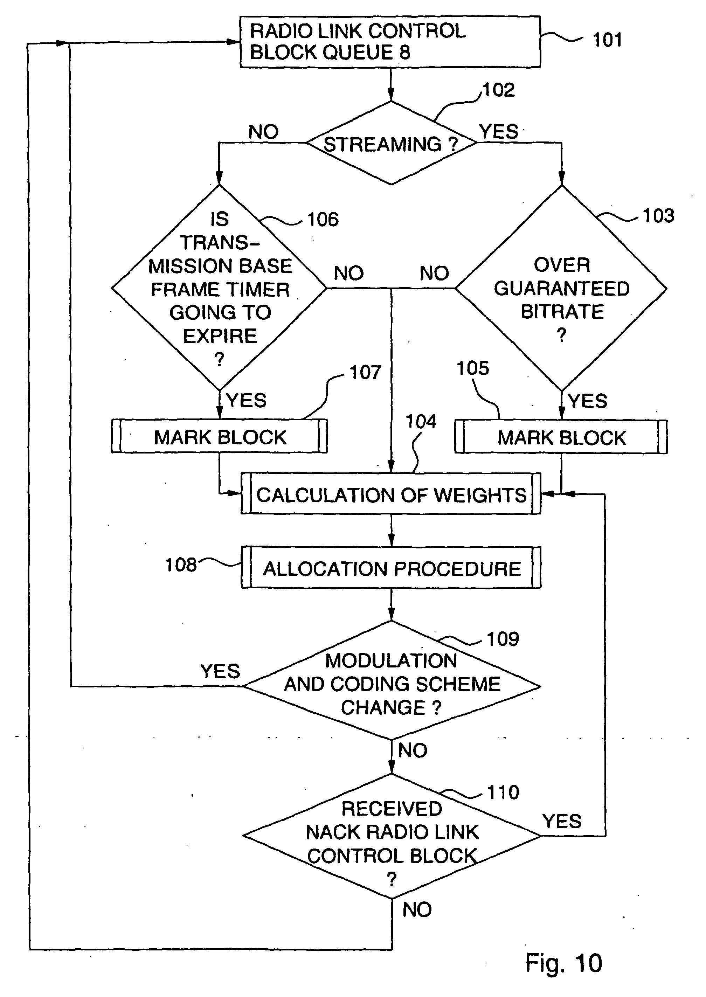

Fig. 10 shows a flow chart of the scheduling method according to the embodiment.

The method is starting in step 101 with the next input from the radio link control block queue 8. In step 102 it is determined, whether the input is of the traffic class streaming. If yes, step 103 follows. If the input block belongs to a data flow of the guaranteed streaming class and by transmitting this block the guaranteed bit rate negotiated is not exceeded, both tested in step 103, then step 104 follows. Otherwise, this block is marked in step 105 which is also succeeded by step 104.

If the input block is not of the streaming class, after step 102 step 106 follows. If the transmission base frame timer of this block is going to expire, as checked in step 106, step 107 of marking this block follows, else step 104 follows which is also succeeding step 107. In step 104 the weights of the radio link control blocks are calculated, as described with reference to Figs. 5 and 7.

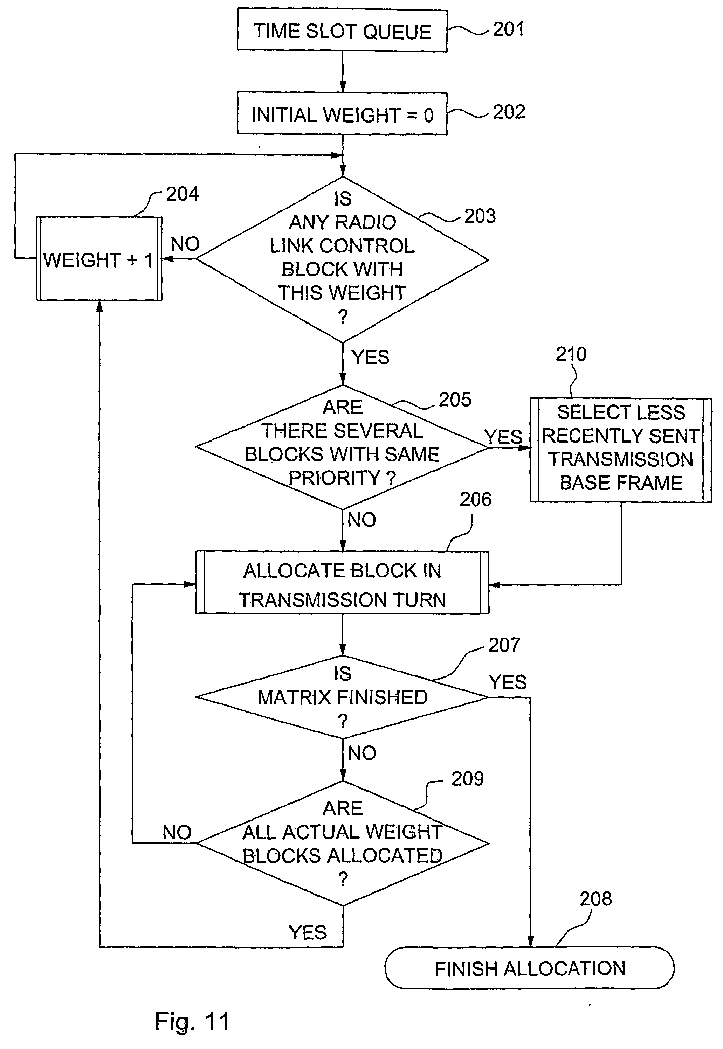

Step 104 is followed by step 108, in which an allocation procedure is performed, as described in greater detail with reference to Fig. 11.

Thereafter, in step 109 it is checked, whether a change in the modulation and coding scheme has occurred. If yes, the scheduling method comes back to step 101 to read in the blocks of the radio link control block queue 8 that are modulated and encoded with the new modulation and coding scheme to guarantee an appropriate scheduling. If the modulation and coding scheme is not changed, step 110 follows, in which it is tested, whether a NACK radio link control block has been received, and in this case the scheduling method jumps back to step 104. Otherwise, the scheduling method can continue regularly with step 101.

Steps 109 and 110 can also be seen as responses to events. Whenever a measurement report arrives and the link adaptation means 3 determines that a new modulation and coding scheme has to be used, the procedure jumps back to step 101. And whenever a NACK message is received, the procedure jumps back to step 104. In this case, the event for step 110 is the reception of a NACK message, which means a radio link control packet data has been lost and has to be retransmitted. It causes a change on the weight associated to this radio link control packet data and a turn reallocation.

Fig. 11 shows the allocation procedure which is called in step 108 of the scheduling method shown in Fig. 10. In step 201 a time slot queue, such as the time slot queue 12 or 13, as shown in Fig. 2, are inputted. Then, an initial weight is set to 0 in step 202. Thereafter, in step 203 it is probed, whether there is any radio link control block with this initial weight. If not, in the following step 204 the weight is increased by 1 and thereafter the procedure jumps back to step 203. If any radio link control block with this weight is detected in step 203, step 205 follows to check, whether there are several blocks with same priority. If there is only one block with this priority, step 205 is succeeded by step 206, in which a block in the transmission turn is allocated. In case there are several blocks with the same priority, step 210 is called first, in which the less recently sent transmission base frame is selected. Thus, a round robin algorithm is used for this case. As an alternative, different priorities could be taken into account for frames with the same weight.

After step 206 it is probed in step 207, whether the matrix has been finished. If yes, the allocation procedure is finished in step 208. Otherwise, the procedure continues with step 209. In step 209 is checked, whether all actual weight blocks are allocated. If not, step 209 is followed by step 206. If yes, the allocation procedure continues with step 204 to increase the weight by 1 and jumps back to step 203.

The present invention relates to a mobile network. This covers, for example, a cellular network and a radio network.

Although an exemplary embodiment of the invention has been disclosed, it will be apparent to those skilled in the art that various changes and modifications can be made which will achieve some of the advantages of the invention without departing from the spirit and scope of the invention, such modifications to the inventive concept are intended to be covered by the appended claims.

**Claims**

1. An apparatus for preparing at least a first (#1) and a second data flow (#2) for transmission in a mobile network, comprising:

   a weight determination means (40) for determining at least one transmission priority for said first data flow (#1) and at least one transmission priority for said second data flow (#2) according to their classes, and

   a scheduling means (1) for scheduling said first and second data flow (#1, #2) for transmission in said mobile network depending on their transmission priority determined by said weight determination means (40),

   **characterized in that**
   said scheduling is made in advance for a maximum duration of a scheduling round (M) lasting more than a packet data, and
   if the transmission is interrupted, a new scheduling begins with a new weight determination, including those packet data unit blocks not been transmitted.

2. An apparatus according to claim 1, **characterized in that** said weight determination means (40) determines said transmission priority in dependence of the traffic class of said first and second data flow (#1, #2).

3. An apparatus according to claim 2, **characterized in that** said traffic class is: streaming, interactive traffic or background traffic.

**4.** An apparatus according to claim 3, **characterized in that** said traffic class of streaming is guaranteed streaming for data flow for which a guaranteed transmission rate is negotiated or non-guaranteed streaming.

**5.** An apparatus according to any one of claims 1 to 4, **characterized in that** said apparatus reserves at least the transmission capacity of said mobile network which is needed for data flow (#1, #2) whose transmission rate is guaranteed.

**6.** An apparatus according to any one of claims 1 to 5, **characterized in that** said weight determination means (40) determines said transmission priority in dependence of the user class of said first and second data flow (#1, #2).

**7.** An apparatus according to any one of claims 1 to 6, **characterized in that** said weight determination means (40) increases said transmission priority for a block of a data flow, when said block is retransmitted.

**8.** An apparatus according to any one of claims 1 to 7, **characterized by** a policing function means (2) for monitoring the provided quality of service of said mobile network.

**9.** An apparatus according to claim 8, **characterized in that** said policing function means (2) counts said correctly sent bits for each data flow (#1, #2), and warns, if the counted bits of a data flow (#1, #2) of a traffic class of guaranteed streaming are less than being guaranteed.

**10.** An apparatus according to any one of claims 1 to 9, **characterized by** a link adaptation means (3) which selects a modulation and coding scheme for maximizing the throughput as well as for achieving the quality of service reliability requirements.

**11.** An apparatus according to any one of claims 1 to 10, **characterized in that** at least two connection channels are provided for said transmission in said mobile network.

**12.** An apparatus according to claim 11, **characterized** that said connection channels are provided by time slots (time slot 0 to time slot 7), and said time slots are divided and/or distributed over at least one physical radio channel of said mobile network.

**13.** A method for preparing at least a first (#1) and a second data flow (#2) for transmission in a mobile network, comprising the steps of:

(a) determining at least one priority for said first data flow (#1) and at least one priority for said second data flow (#2) according to their classes,
(b) scheduling said first and second data flow for transmission in said mobile network according to their priorities, whereby said scheduling is made in advance for a maximum duration of a scheduling round (M) lasting more than a packet data, and
**characterized by the step of:**
(c) beginning a new scheduling with a new weight determination, including those packet data unit blocks not been transmitted, if the transmission is interrupted.

**14.** A method according to claim 13, **characterized in that** said priorities are determined according to the traffic class and/or the user class of said first and second data flow (#1, #2).

**15.** A method according to claim 14 comprising the further step of:

reserving at least the transmission capacity of said mobile network which is needed for the data flow having a traffic class of guaranteed streaming for which a guaranteed transmission rate is negotiated.

**16.** A method according to any one of claims 13 to 15 comprising the further step of:

policing the amount of correctly sent bits of each data flow, and
determining, whether the quality of said transmission has changed.

**17.** A method according to any one of claims 14 to 16 comprising the further step of:

maximizing the throughput by adaptation of the link due to a change in the modulation and coding scheme.

**Patentansprüche**

1. Vorrichtung zum Vorbereiten zumindest eines ersten (#1) und eines zweiten Datenflusses (#2) zur Übertragung in einem mobilen Netz, mit:

   einer Wertigkeitsbestimmungseinrichtung (40) zum Bestimmen von zumindest einer Übertragungspriorität für den ersten Datenfluss (#1) und zumindest einer Übertragungspriorität für den zweiten Datenfluss (#2) entsprechend ihrer Klassen, und
   einer Ablaufkoordinationseinrichtung (1) zur Ablaufkoordination (Scheduling) der ersten und zweiten Datenflüsse (#1, #2) für die Übertragung in dem mobilen Netz in Abhängigkeit ihrer durch die Wertigkeitsbestimmungseinrichtung (40) bestimmten Übertragungspriorität,

   **dadurch gekennzeichnet, dass**
   die Ablaufskoordination im Voraus erfolgt für eine maximale Dauer einer Ablaufkoordinationsrunde (M), die länger als ein Datenpaket dauert, und falls die Übertragung unterbrochen wird, beginnt eine neue Ablaufkoordination mit einer neuen Wertigkeitsbestimmung, die die nicht übertragenen Paketdateneinheitsblöcke umfasst.

2. Vorrichtung nach Anspruch 1, **dadurch gekennzeichnet, dass** die Wertigkeitsbestimmungseinrichtung (40) die Übertragungspriorität in Abhängigkeit der Verkehrsklasse der ersten und zweiten Datenflüsse (#1, #2) bestimmt.

3. Vorrichtung nach Anspruch 2, **dadurch gekennzeichnet, dass** die Verkehrsklasse ist: Streaming, interaktiver Verkehr oder Hintergrundverkehr.

4. Vorrichtung nach Anspruch 3, **dadurch gekennzeichnet, dass** die Verkehrsklasse des Streaming ein garantiertes Streaming für einen Datenfluss ist, für den eine garantierte Übertragungsrate verhandelt ist, oder ein nichtgarantiertes Streaming.

5. Vorrichtung nach einem der Ansprüche 1 bis 4, **dadurch gekennzeichnet, dass** die Vorrichtung zumindest diejenige Übertragungskapazität des mobilen Netzes reserviert, die für einen Datenfluss (#1, #2) erforderlich ist, dessen Übertragungsrate garantiert ist.

6. Vorrichtung nach einem der Ansprüche 1 bis 5, **dadurch gekennzeichnet, dass** die Wertigkeitsbestimmungseinrichtung (40) die Übertragungspriorität in Abhängigkeit der Nutzerklassen des ersten und zweiten Datenflusses (#1, #2) bestimmt.

7. Vorrichtung nach einem der Ansprüche 1 bis 6, **dadurch gekennzeichnet, dass** die Wertigkeitsbestimmungseinrichtung (40) die Übertragungspriorität für einen Block eines Datenflusses erhöht, wenn der Block wiederholt übertragen wird.

8. Vorrichtung nach einem der Ansprüche 1 bis 7, **gekennzeichnet durch** eine Richtlinienfunktionseinrichtung (2) zum Überwachen der bereitgestellten Servicequalität des mobilen Netzes.

9. Vorrichtung nach Anspruch 8, **dadurch gekennzeichnet, dass** die Richtlinienfunktionseinrichtung (2) die korrekt gesendeten Bits für jeden Datenfluss (#1, #2) zählt und eine Warnung abgibt, falls die gezählten Bits eines Datenflusses (#1, #2) einer Verkehrsklasse mit garantiertem Streaming geringer sind als garantiert ist.

10. Vorrichtung nach einem der Ansprüche 1 bis 9, **gekennzeichnet durch** eine Verbindungsanpassungseinrichtung (3), die ein Modulations- und Codierungsschema zur Maximierung des Durchsatzes und auch zur Erzielung der Servicequalitätzuverlässigkeitserfordernisse auswählt.

11. Vorrichtung nach einem der Ansprüche 1 bis 10, **dadurch gekennzeichnet, dass** zumindest zwei Verbindungskanäle bereitgestellt sind für die Übertragung in dem mobilen Netz.

12. Vorrichtung nach Anspruch 11, **dadurch gekennzeichnet, dass** die Verbindungskanäle mit Zeitschlitzen (Zeitschlitz 0 bis Zeitschlitz 7) bereitgestellt sind, und die Zeitschlitze aufgeteilt und/oder verteilt sind über zumindest einen physikalischen Funkkanal des mobilen Netzes.

13. Verfahren zum Vorbereiten von zumindest einem ersten (#1) und einem zweiten Datenfluss (#2) zur Übertragung in einem mobilen Netz, mit den Schritten des:

a) Bestimmens zumindest einer Priorität für den ersten Datenfluss (#1) und zumindest einer Priorität für den zweiten Datenfluss (#2) entsprechend ihrer Klassen,
b) Koordinierens des Ablaufes (Scheduling) des ersten und zweiten Datenflusses zur Übertragung in dem mobilen Netz entsprechend ihrer Prioritäten, wodurch die Ablaufkoordinierung im Voraus erfolgt für eine maximale Dauer einer Ablaufsteuerungsrunde (M), die länger als ein Datenpaket dauert, und
**gekennzeichnet durch den Schritt des:**
c) Beginnens einer neuen Ablaufkoordination mit einer neuen Wertigkeitsbestimmung, die die nicht übertragenen Paketdateneinheitsblöcke umfasst, falls die Übertragung gestört ist.

14. Verfahren nach Anspruch 13, **dadurch gekennzeichnet, dass** die Prioritäten entsprechend der Verkehrsklasse und/oder der Nutzerklasse der ersten und zweiten Datenflüsse (#1, #2) bestimmt werden.

15. Verfahren nach Anspruch 14 mit dem weiteren Schritt des:

Reservierens zumindest derjenigen Übertragungskapazität des mobilen Netzes, die für den Datenfluss mit einer Verkehrsklasse mit garantiertem Streaming, für den eine garantierte Übertragungsrate verhandelt ist, erforderlich ist.

16. Verfahren nach einem der Ansprüche 13 bis 15 mit dem weiteren Schritt des:

Kontrollierens der Menge korrekt gesendeter Bits eines jeden Datenflusses, und
Bestimmens, ob sich die Qualität der Übertragung geändert hat.

17. Verfahren nach einem der Ansprüche 14 bis 16 mit dem weiteren Schritt des:

Maximierens des Durchsatzes durch Anpassen der Verbindung aufgrund einer Änderung in dem Modulations- und Codierungsschema.

**Revendications**

1. Appareil de préparation d'au moins un premier (#1) et un second (#2) flot de données pour une transmission dans un réseau mobile, comprenant :

un moyen de détermination de poids (40) destiné à déterminer au moins une priorité de transmission pour ledit premier flot de données (#1) et au moins une priorité de transmission pour ledit second flot de données (#2) selon leur classe, et
un moyen de planification (1) destiné à planifier lesdits premier et second flots de données (#1, #2) pour une transmission dans ledit réseau mobile en fonction de leur priorité de transmission déterminée par ledit moyen de détermination de poids (40),

**caractérisé en ce que**
ladite planification est faite à l'avance pendant une durée maximale d'une passe de planification (M) durant plus d'une donnée par paquet, et
si la transmission est interrompue, une nouvelle planification commence avec une nouvelle détermination de poids, comprenant les blocs d'unité de données par paquet non transmis.

2. Appareil selon la revendication 1, **caractérisé en ce que** ledit moyen de détermination de poids (40) détermine ladite priorité de transmission en fonction de la classe de trafic desdits premier et second flots de données (#1, #2).

3. Appareil selon la revendication 2, **caractérisé en ce que** ladite classe de trafic est : l'émission en continu, le trafic interactif ou le trafic de fond.

**4.** Appareil selon la revendication 3, **caractérisé en ce que** ladite classe de trafic de l'émission en continu est une émission en continu garantie pour le flot de données pour lequel une vitesse de transmission garantie est négociée, ou une émission en continue non garantie.

**5.** Appareil selon l'une quelconque des revendications 1 à 4, **caractérisé en ce que** ledit appareil réserve au moins la capacité de transmission dudit réseau mobile qui est nécessaire pour le flot de données (#1, #2) dont la vitesse de transmission est garantie.

**6.** Appareil selon l'une quelconque des revendications 1 à 5, **caractérisé en ce que** ledit moyen de détermination de poids (40) détermine ladite priorité de transmission en fonction de la catégorie d'utilisateur desdits premier et second flots de données (#1, #2).

**7.** Appareil selon l'une quelconque des revendications 1 à 6, **caractérisé en ce que** ledit moyen de détermination de poids (40) augmente ladite priorité de transmission pour un bloc d'un flot de données, lorsque ledit bloc est retransmis.

**8.** Appareil selon l'une quelconque des revendications 1 à 7, **caractérisé par** un moyen de fonction de police (2) destiné à surveiller la qualité de service fournie dudit réseau mobile.

**9.** Appareil selon la revendication 8, **caractérisé en ce que** ledit moyen de fonction de police (2) compte lesdits bits correctement envoyés pour chaque flot de données (#1, #2) et prévient si les bits comptés d'un flot de données (#1, #2) d'une classe de trafic d'émission en continu garantie sont inférieurs à celle garantie.

**10.** Appareil selon l'une quelconque des revendications 1 à 9, **caractérisé par** un moyen d'adaptation de liaison (3) qui sélectionne un schéma de modulation et de codage destiné à maximiser le débit de même qu'à atteindre les exigences de fiabilité de qualité de service.

**11.** Appareil selon l'une quelconque des revendications 1 à 10, **caractérisé en ce qu'**au moins deux canaux de connexion sont fournis pour ladite transmission dans ledit réseau mobile.

**12.** Appareil selon la revendication 11, **caractérisé en ce que** lesdits canaux de connexion sont fournis par des tranches de temps (tranche de temps 0 à tranche de temps 7), et lesdites tranches de temps sont divisées et/ou distribuées sur au moins un canal radio physique dudit réseau mobile.

**13.** Procédé de préparation d'au moins un premier (#1) et un second (#2) flot de données pour une transmission dans un réseau mobile, comprenant les étapes consistant à :

a) déterminer au moins une priorité pour ledit premier flot de données (#1) et au moins une priorité pour ledit second flot de données (#2) selon leurs classes,
b) planifier lesdits premier et second flots de données pour une transmission dans ledit réseau mobile selon leur priorité, moyennant quoi ladite planification est faite à l'avance pendant une durée maximale d'une passe de planification (M) durant plus d'une donnée par paquet, et
**caractérisé par** l'étape consistant à :
c) commencer une nouvelle planification avec une nouvelle détermination de poids, comprenant les blocs d'unité de données par paquet non transmis, si la transmission est interrompue.

**14.** Procédé selon la revendication 13, **caractérisé en ce que** lesdites priorités sont déterminées selon la classe de trafic et/ou la catégorie d'utilisateur desdits premier et second flots de données (#1, #2).

**15.** Procédé selon la revendication 14, comprenant l'étape supplémentaire consistant à :

réserver au moins la capacité de transmission dudit réseau mobile qui est nécessaire pour le flot de données ayant une classe de trafic d'émission en continu garantie pour laquelle une vitesse de transmission garantie est négociée.

**16.** Procédé selon l'une quelconque des revendications 13 à 15, comprenant l'étape supplémentaire consistant à :

contrôler la quantité de bits correctement envoyés de chaque flot de données, et

déterminer si la qualité de ladite transmission a changé ou non.

17. Procédé selon l'une quelconque des revendications 14 à 16, comprenant l'étape supplémentaire consistant à :

maximiser le débit par adaptation de la liaison dû à un changement dans le schéma de modulation et de codage.

```
┌─────────────────┐          ┌──────────────────────────────────────┐
│  SCHEDULING     │◄────────►│  POLICING FUNCTION MEANS      2       │
│                 │   ⌇                                              │
│  MEANS          │   4                                              │
│                 │          └──────────────────────────────────────┘
│           1     │◄────────►┌──────────────────────────────────────┐
└─────────────────┘          │  LINK ADAPTATION MEANS       3        │
                        ⌇    │                                      │
                        5    └──────────────────────────────────────┘
```

Fig. 1

| MODULATION AND CODING SCHEME | NUMBER OF TRANSMITTED BITS |
|:---:|:---:|
| 1 | 176 |
| 2 | 224 |
| 3 | 296 |
| 4 | 352 |
| 5 | 448 |
| 6 | 592 |
| 7 | 896 |
| 8 | 1088 |
| 9 | 1184 |

Fig. 3

Fig. 2

EP 1 415 443 B1

| | TIME SLOT 0 | TIME SLOT 1 | TIME SLOT 2 |
|---|---|---|---|
| | . . . | . . . | . . . |
| | ⋮ | ⋮ | ⋮ |
| | 3 | 2 | 1 |
| | 1 | 1 | 2 |
| | 1 | 1 | 2 |
| | 1 | 1 | 1 |

30

M

N = 3

STREAMING SERVICE

31

| 1 | 1 | 1 |
|---|---|---|

INTERACTIVE SERVICE

32

| 2 | 2 |
|---|---|

BACKGROUND SERVICE

33

| 3 |
|---|

Fig. 4

| WEIGHT DETERMINATION MEANS 40 | | |
|---|---|---|
| TYPE OF TRAFFIC | | WEIGHT |
| STREAMING | GUARANTEED | 2 |
| | NON GUARANTEED | 4 |
| INTER-ACTIVE | TRAFFIC HANDLING PRIORITY 1 | 5 |
| | TRAFFIC HANDLING PRIORITY 2 | 6 |
| | TRAFFIC HANDLING PRIORITY 3 | 7 |
| BACKGROUND | | 8 |
| TRANSMISSION BLOCK FRAME TIMER IS ABOUT TO EXPIRE ? | | 3 |
| RETRANS-MISSION | INTERACTIVE | OLD - 1 |
| | BACKGROUND | OLD - 1 |
| | STREAMING | 1 |

Fig. 5

| TIME SLOT 0 | TIME SLOT 1 | TIME SLOT 2 | TIME SLOT 3 | TIME SLOT 4 | TIME SLOT 5 | TIME SLOT 6 | TIME SLOT 7 |
|---|---|---|---|---|---|---|---|

| STREAMING WITH 64 kbps 1 | STREAMING WITH 32 kbps 2 | STREAMING WITH 64 kbps 3 |
|---|---|---|

| I-1 4 | I-1 6 | B 9 | B 12 | I-1 15 | I-2 18 | I-3 19 | B 20 |
|---|---|---|---|---|---|---|---|

| B 5 | I-2 7 | B 10 | B 13 | I-1 16 | | | B 21 |
|---|---|---|---|---|---|---|---|

| I-2 8 | B 11 | B 14 | B 17 |
|---|---|---|---|

Fig. 6

| WEIGHT ALLOCATION MEANS 41 | | | | |
|---|---|---|---|---|
| IDENTIFICATION NUMBER | TRAFFIC CLASS | POLICING FUNCTION | TRAFFIC HANDLING PRIORITY | WEIGHT |
| 1 | 2 | 0 | - | 2 |
|  |  | 2 | - | 4 |
| 2 | 2 | 0 | - | 2 |
| 3 | 2 | 0 | - | 2 |
| 4 | 4 | - | 1 | 5 |
| 5 | 8 | - | - | 8 |
| 6 | 4 | - | 1 | 5 |
| 7 | 4 | - | 2 | 6 |
| 8 | 4 | - | 2 | 6 |
| 9 | 8 | - | - | 8 |
| 10 | 8 | - | - | 8 |
| 11 | 8 | - | - | 8 |
| 12 | 8 | - | - | 8 |
| 13 | 8 | - | - | 8 |
| 14 | 8 | - | - | 8 |
| 15 | 4 | - | 1 | 5 |
| 16 | 4 | - | 1 | 5 |
| 17 | 8 | - | - | 8 |
| 18 | 4 | - | 2 | 6 |
| 19 | 4 | - | 3 | 7 |
| 20 | 8 | - | - | 8 |
| 21 | 8 | - | - | 8 |

Fig. 7

| | TIME SLOT 0 | TIME SLOT 1 | TIME SLOT 2 | TIME SLOT 3 | TIME SLOT 4 | TIME SLOT 5 | TIME SLOT 6 | TIME SLOT 7 |
|---|---|---|---|---|---|---|---|---|
| TURN 5 | 5 | 7 | 10 | 13 | 17 | 3 | 19 | 20 |
| TURN 4 | 4 | 6 | 9 | 12 | 16 | 3 | 3 | 3 |
| TURN 3 | 1 | 1 | 1* | 2 | 15 | 3 | 3 | 3 |
| TURN 2 | 1 | 1 | 1 | 2 | 2 | 3 | 3 | 3 |
| TURN 1 | 1 | 1 | 1 | 2 | 2 | 3 | 3 | 3 |

$M = 5$

$N = 8$

Fig. 8

| | TIME SLOT 0 | TIME SLOT 1 | TIME SLOT 2 | TIME SLOT 3 | TIME SLOT 4 | TIME SLOT 5 | TIME SLOT 6 | TIME SLOT 7 |
|---|---|---|---|---|---|---|---|---|
| TURN 9 | 4 | 7 | 11 | 14 | 17 | 3 | 19 | 20 |
| TURN 8 | 1 | 6 | 10 | 13 | 15 | 3 | 3 | 3 |
| TURN 7 | 1 | 1 | 1 | 2 | 16 | 3 | 3 | 3 |
| TURN 6 | 1 | 1 | 1 | 2 | 2 | 3 | 3 | 3 |
| TURN 5 | 1 | 1 | 1 | 2 | 2 | 3 | 3 | 3 |

$M = 5$

$N = 8$

Fig. 9

Fig. 10

TIME SLOT QUEUE — 201

INITIAL WEIGHT = 0 — 202

204

WEIGHT + 1 ←─NO── IS ANY RADIO LINK CONTROL BLOCK WITH THIS WEIGHT ? — 203

YES

ARE THERE SEVERAL BLOCKS WITH SAME PRIORITY ? — 205 ──YES──→ SELECT LESS RECENTLY SENT TRANSMISSION BASE FRAME — 210

NO

ALLOCATE BLOCK IN TRANSMISSION TURN — 206

IS MATRIX FINISHED ? — 207 ──YES──

NO

ARE ALL ACTUAL WEIGHT BLOCKS ALLOCATED ? — 209

NO ←─ ─→ YES

FINISH ALLOCATION — 208

Fig. 11